# EUROPEAN PATENT SPECIFICATION

(11) **EP 4 219 931 B1**
(45) Date of publication and mention of the grant of the patent: **12.03.2025**
(21) Application number: 23166317.0
(22) Date of filing: 02.08.2019
(51) Int. Cl.: F02M 35/09

(54) **FILTER ELEMENTS AND SYSTEMS WITH DATA CONVEYANCE FEATURES**
FILTERELEMENTE UND SYSTEME MIT DATENÜBERMITTLUNGSFUNKTIONEN
ÉLÉMENTS DE FILTRE ET SYSTÈMES À ÉLÉMENTS DE TRANSPORT DE DONNÉES

(30) Priority: 07.08.2018 US 201862715551 P
(43) Date of publication of application: 02.08.2023
(62) Divisional of application: 19752901.9
(73) Proprietor: DONALDSON COMPANY, INC., Bloomington, MN 55431 (US)
(72) Inventor: ADAMEK, Daniel E., Minneapolis, Minnesota, 55440-1299 (US); LOCKERT, Michael, J., Minneapolis, Minnesota, 55440-1299 (US); MULDER, David, W., Minneapolis, Minnesota, 55440-1299 (US); TUCKER, Brian R., Minneapolis, Minnesota, 55440-1299 (US); ANDERSON, Matthew, Minneapolis, Minnesota, 55440-1299 (US)
(74) Representative: PGA S.p.A., Milano, Succursale di Lugano

(56) References cited:
- WO-A1-2017/192729
- DE-A1- 102014 015 397
- US-A1- 2009 143 954
- US-A1- 2013 220 900
- US-A1- 2017 173 505

## Description

### Field

Embodiments herein relate to filter elements and filtration systems. More specifically, embodiments herein relate to filter elements and filtration systems configured to convey data.

### Background

Fluid streams often carry particulate material therein. In many instances, it is desirable to remove some or all of the particulate material from a fluid flow stream. For example, air intake streams to engines for motorized vehicles or power generation equipment, gas streams directed to gas turbines, and air streams to various combustion furnaces, often include particulate material therein. The particulate material, should it reach the internal workings of the various mechanisms involved, can cause substantial damage thereto. It is therefore desirable for such systems to remove the particulate material from the fluid flow upstream of the engine, turbine, furnace or other equipment involved.

A variety of air filter or gas filter arrangements have been developed for particulate removal. Beyond particulate removal, filtration systems can also be used as gas phase or liquid phase contaminant removal systems.

Many filtration systems include portions that are designed to be substantially permanent (such as filter housings) and portions that are designed to be replaced periodically to assure proper operation (such as filter elements that fit within filter housings).

Document WO2017/192729A1 discloses a filter system with a wireless identification tag coupled to a replaceable filter element to identify the filter element.

Document DE102014015397A1 is directed to a filter device for a motor vehicle, comprising at least one gas filter element arranged in a corresponding housing and a sensor device for determining a parameter, which is the installation position of the filter element and time of installation of the filter element. The parameter is transferable to an evaluation unit for evaluating the parameter.

### SUMMARY

A method according to the invention of providing data to a filtration system is disclosed in any one of claims 1-8.

A filtration system according to the invention is disclosed in any one of claims 9-15.

This summary is an overview of some of the teachings of the present application and is not intended to be an exclusive or exhaustive treatment of the present subject matter. Further details are found in the detailed description and appended claims. Other aspects will be apparent to persons skilled in the art upon reading and understanding the following detailed description and viewing the drawings that form a part thereof, each of which is not to be taken in a limiting sense. The scope herein is defined by the appended claims and their legal equivalents.

### Brief Description of the Figures

Aspects may be more completely understood in connection with the following drawings, in which:
FIG. 1 is a schematic view of a supply chain flow of filter elements in accordance with various embodiments herein.
FIG. 2 is a schematic cross-sectional view of a filtration system with a primary filter element and a secondary or safety filter element installed therein in accordance with various embodiments herein.
FIG. 3 is a cross-sectional schematic view of portions of a filtration system according to various embodiments herein.
FIG. 4 is a schematic view of data storage hardware and data types in accordance with various embodiments herein.
FIG. 5 is a schematic view of a flow of filter elements in accordance with various embodiments herein.
FIG. 6 is a schematic view of components of a system in accordance with various embodiments herein.
FIG. 7 is a schematic view of components of a system in accordance with various embodiments herein.
FIG. 8 is a diagram of a method in accordance with various embodiments herein.
FIG. 9 is a diagram of a method in accordance with various embodiments herein.

While embodiments are susceptible to various modifications and alternative forms, specifics thereof have been shown by way of example and drawings, and will be described in detail. It should be understood, however, that the scope herein is not limited to the particular embodiments described. On the contrary, the intention is to cover modifications and alternatives falling within the scope as defined by the claims.

### Detailed Description

As described above, many filtration systems include a portion (such as a filter element) that must be replaced periodically to maintain a desired level of filtration performance. Other portions of the filtration system, such as the filter housing, are designed to be substantially permanent and remain in place after initial installation (either during initial system/vehicle assembly in an OEM scenario or after installation of an after-market kit).

In some cases, filtration systems (or other components separate from the filtration system such as a separate reader or computation device) can include one or more processing circuits and/or processors and may execute various operations including performing various calculations, including but not limited to, end-of-life (EOL) calculations, plugging calculations, and the like. Firmware or other types of stored electronic instructions and/or operating software can be used to direct the operations performed by the system.

If the filtration system can be connected to a data network then it can be possible to send instructions to the filtration systems remotely and/or send updates including updates to firmware, operating software, or the like. However, the filtration system may not be connected to a data network and/or it may be impossible to send instructions or updates to the filtration systems installed in the field over a data network. Further, in some scenarios the filtration system may be connected to a data network, but for various reasons data flow may be limited to one-way (e.g., machine to network). In yet other scenarios, there may be a network connection, but it may be unreliable or inconsistently available. In these cases, it can be extremely challenging to keep the system components updated with the latest firmware, operating software, etc.

In accordance with embodiments herein, certain types of data, such as firmware and/or other software updates, can be loaded onto replaceable filter elements (or other replaceable system components) and can be conveyed onto filtration systems that are installed in the field when a filter element or other replaceable element is installed. In this manner, firmware and other software updates can be provided to remote, field-installed systems despite there being no direct connection available to those remote, field-installed systems through a data network. This approach can solve a long-standing problem associated with providing updates to remote, field-installed systems that are not directly reachable through a data network such as the Internet or another type of data network.

As used herein, the term "firmware" shall refer to a specific class of computer software that provides the low-level control for the device's specific hardware. Firmware is generally held in non-volatile memory devices such as ROM, EPROM, or flash memory.

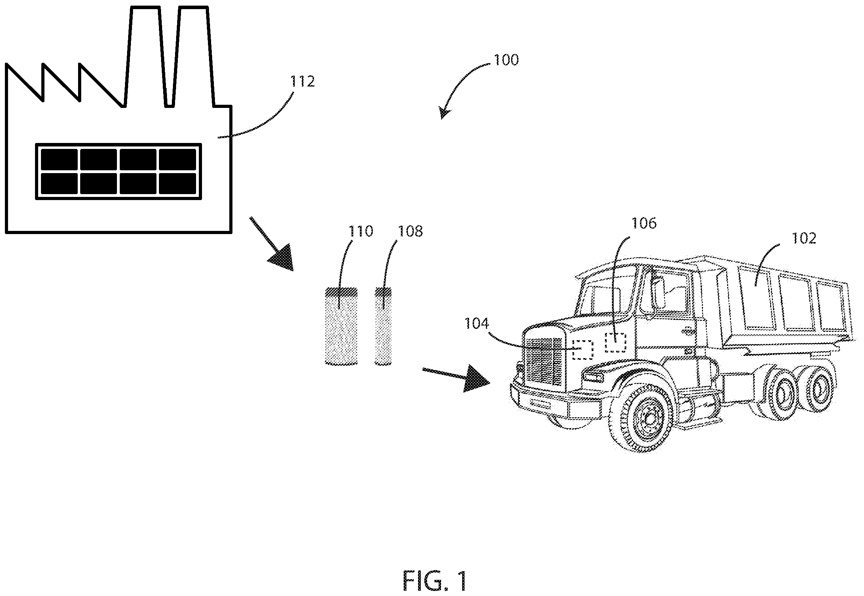

Referring now to FIG. 1, a schematic view of a supply chain flow of replaceable filter elements 108, 110 is shown in accordance with various embodiments herein. Specifically, in this view, the conveyance of filter elements from a manufacturing facility 112 onto a remote, field installed filtration system 104 is shown. Filter elements 108, 110 are produced, in whole or in part, at the manufacturing facility 112. The filter elements 108, 110 can be of various types. In some embodiments, the filter elements can be a primary filter element 110 and a secondary or safety filter element 108. In some embodiments, there may only be a single type of filter element that passes through the supply chain to enable replacement. The filter elements can be for used in air intake filtration systems, exhaust filtration systems, fuel filtration systems, oil/lubricant filtration systems, industrial air particulate filtration systems, air handling systems, or the like.

At or after the time of filter element manufacture, data can be loaded onto the filter elements 108, 110. For example, in some embodiments data can be loaded onto the filter elements at a manufacturing facility 112. In some embodiments, data can be loaded onto a data storage element prior to filter element manufacture and then the data storage element can be integrated with the other filter element components during filter element manufacturing processes (e.g., an inventory of pre-programmed data storage elements could be maintained and then used during the manufacturing process). In other embodiments, a data storage element can be integrated with other filter element components during manufacturing first and then data can be loaded onto the data storage element later (e.g., an inventory of data storage elements that still require programming could be maintained). In some embodiments, data can be loaded onto the filter elements after they have left the manufacturing facility 112, but are still within the supply chain. For example, in some embodiments, data can be loaded onto the filter elements at a distribution or transport facility. In still further embodiments, data can be loaded onto the filter elements at a customer facility before installation of the filter elements.

The filter elements can include data storage circuits/components thereon with which to receive and store the data. The data can be of various types, such as such as firmware and/or other software updates. In some embodiments, the filter elements 108, 110 are ultimately installed in a filtration system 104 within a vehicle 102. In this case, the filtration system 104 is a remote, field-installed system within a vehicle 102. However, it will be appreciated that the remote field-installed system could also be within another type of environment besides a vehicle such as a remote plant or factory with an industrial air filtration system. The vehicle 102 can include an ECU (engine control unit) 106 and can, of course, also include many other components. In some embodiments, the ECU 106 and the filtration system 104 can exchange data. In some embodiments, the filtration system 104 can send data to the ECU 106 or receive data from the ECU 106 through a CAN bus system or other type of local data network. In other embodiments, however, the filtration system 104 and the ECU 106 are completely isolated from one another in terms of data exchange. In non-engine applications, a device equivalent to an ECU can be present, such as a master control system or other high-level system including a processor or other computing device and taking inputs from the overall system.

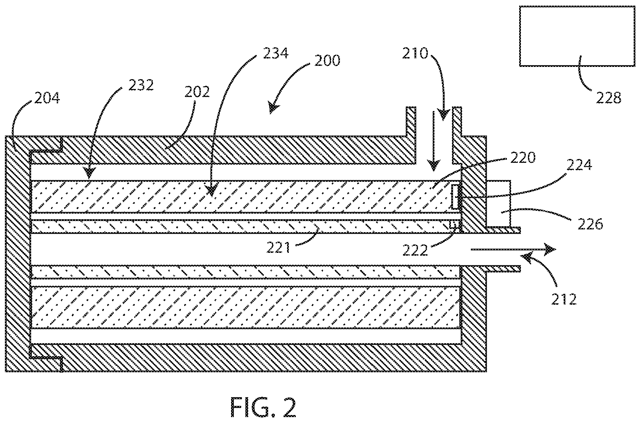

Referring now to FIG. 2, a schematic cross-sectional view of a filtration system 200 with a primary filter element 220 and a secondary or safety filter element 221 installed therein in accordance with various embodiments herein. This serves as merely one example of a filtration system and many other types of filtration systems are contemplated herein. With reference to the primary filter element 220, a filter body 232 and filter media 234 disposed within the filter body 232 can be included. However, it will be appreciated that the secondary or safety filter element 221, as well as other filter elements can similarly include a filter body and filter media. The filtration system 200 can include a housing 202 comprising a fluid inlet 210 and a fluid outlet 212, the housing defining an internal volume. A primary filter element 220 can be disposed within the internal volume of the housing 202 and can be configured to be removably disposed therein. The proximal end of the internal volume is configured to engage with a removable cover 204 that fits adjacent to the proximal end in order to seal off the proximal end of the housing from the flow of fluid there through. The removable cover 204 can engage the proximal end and remain attached thereto through various devices or structures including threads, friction-fit mechanisms, latches, buckles, snap-fit mechanisms, or the like.

A data storage element 222 can be associated with the secondary or safety filter element 221. A data storage element 224 can also be associated with the primary filter element 220. However, while not intending to be bound by theory, it is believed that in some embodiments the primary filter element 220 is replaced more often than the secondary or safety filter element 221. As such, in some embodiments, to maximize opportunities to convey data while simultaneously reducing cost and overall complexity of the system, only the primary filter element 220 includes a data storage element 224 and not the secondary or safety filter element 221. Alternatively, in some embodiments, a data storage element 222 associated with a secondary or safety filter element 221 stores a lesser amount of data, and/or a different kind of data, than that stored by a data storage element 224 associated with a primary filter element 220.

One or both of the data storage elements 222, 224 can communicate, either through a wired or wireless data connection, with a filter housing associated reader device 226. Alternatively, or in addition, one or both of the data storage elements 222, 224 can communicate, either through a wired or wireless data connection, with a separate reader device 228. The separate reader device 228 can be part of a vehicle or other equipment structure or can be off-vehicle or completely separate from other equipment structures.

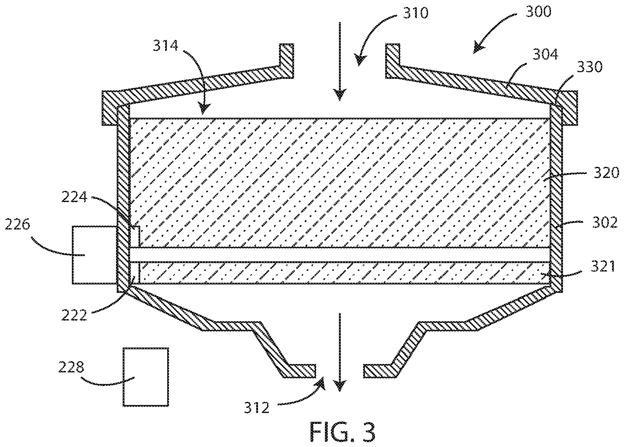

It will be appreciated that filtration systems herein can take on many different shapes and configurations. Referring now to FIG. 3, a schematic cross-sectional view is shown of a filtration system 300 with a primary filter element 320 and a secondary filter element 321 installed therein in accordance with various embodiments herein. The filtration system 300 can include a housing 302 comprising a fluid inlet 310 and a fluid outlet 312. The housing can define an internal volume 314. The primary filter element 320 can be disposed within the internal volume 314 of the housing 302 and can be configured to be removably disposed therein. The secondary filter element 321 can be disposed within the internal volume 314 of the housing 302 and can also be configured to be removably disposed therein. In this embodiment, the primary filter element 320 can be removed with or without also removing the secondary filter element 321.

The proximal end of the internal volume 314 is configured to engage with a cover 304 that fits adjacent to the proximal end 330 in order to seal off the proximal end of the housing from the flow of fluid there through.

A first data storage element 224 can be associated with, such as disposed on or in, the primary filter element 320 and a second data storage element 222 can be associated with, such as disposed on or in, the secondary filter element 321. One or both of the data storage elements 222, 224 can communicate, either through a wired or wireless data connection, with a filter housing associated reader 226. Alternatively, or in addition, one or both of the data storage elements 222, 224 can communicate, either through a wired or wireless data connection, with a separate reader device 228.

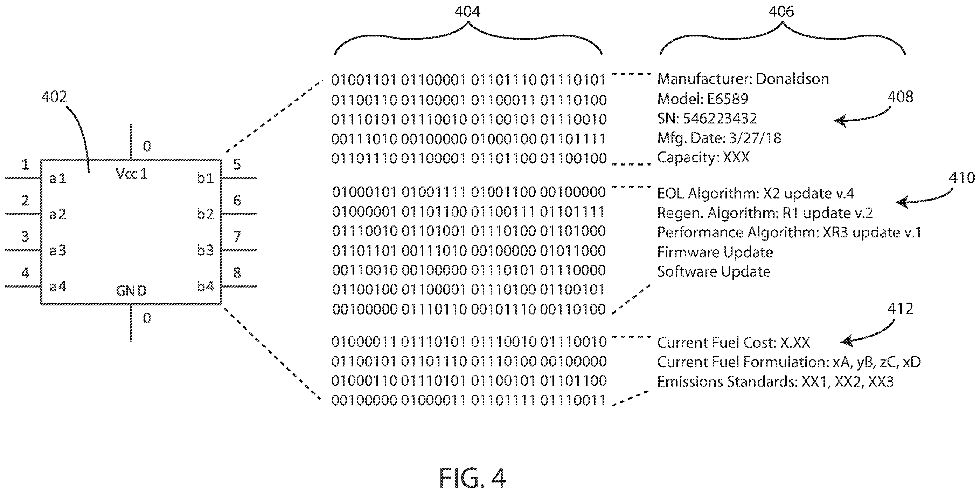

Referring now to FIG. 4, a schematic view is shown of data storage hardware and data types in accordance with various embodiments herein. In various embodiments, an electronic circuit or electronic component 402 can be used to store data 404. Various types of memory storage can be used, including dynamic RAM (D-RAM), read only memory (ROM), static RAM (S-RAM), disk storage, flash memory, EPROM. battery-backed RAM such as S-RAM or D-RAM and any other type of digital data storage component. In some embodiments, the electronic circuit or electronic component includes non-volatile memory and/or volatile memory. In some embodiments, the electronic circuit or electronic component can include transistors interconnected so as to provide positive feedback operating as latches or flip flops, providing for circuits that have two or more metastable states, and remain in one of these states until changed by an external input. Memory storage can be based on such flip-flop containing circuits. Memory storage can also be based on the storage of charge in a capacitor or on other principles.

In some embodiments, the electronic circuit or electronic component 402 storing data can be in electronic communication with other components such as a communication circuit, and antenna, a power source (such as a battery), or the like.

The data 404 stored by the electronic circuit or electronic component 402 can be of various types 406 including, but not limited to filter element intrinsic data 408, operational program data 410, and extrinsic data 412.

By way of example, in some embodiments, the data 404 can include filter element intrinsic data 408. Examples of filter element intrinsic data 408 can include, but are not limited to, a manufacturing date; a filter element ID; a filter element model ID; a filter element manufacturer ID; a filter element manufacturing plant ID; and a filter element performance characteristic. Filter element performance characteristics can include, but are not limited to, filter element capacity information, filter element terminal pressure drop associated with model ID, filter element loading curves, filter element loading coefficients, typical fuel consumption rate for a machine associated with the filter element model ID, fuel usage penalty factor for increased filter element pressure drop for a machine associate with the filter element model ID. In various embodiments, the filter element intrinsic data 408 can be in the form of ASCII, hexadecimal, octal, decimal, binary, HTML, or other character or symbol codes stored electronically. In various embodiments, the filter element intrinsic data 408 is not in the form of compiled code. In some embodiments, filter element intrinsic data 408 can be encrypted at rest on the filter element.

In some embodiments, the data 404 can include operational program data 410. Examples of operational program data 410 can include, but are not limited to, an algorithm definition, an operating software update, and a firmware update. In some embodiments, an algorithm definition can include at least one of an end-of-life (EOL) prediction algorithm definition, a regeneration event recommendation algorithm definition, and a filtration performance algorithm definition. In various embodiments, the operational program data can be compiled code, compiled code modules, one or more compiled code libraries, binary code libraries, object code, assembly code, and/or machine code or the like. In some embodiments, operational program data 410 can be encrypted at rest on the filter element.

In some embodiments, the operating software update can be a reader device operating software update or an operating software update for a device other than a reader device. In some embodiments, the firmware update can be a reader device firmware update or a firmware update for a device other than a reader device.

In some embodiments, the data 404 can include extrinsic data 412. Extrinsic data can be important for calculating economically optimal filter clement change/replacement times/intervals. Examples of extrinsic data 412 can include, but are not limited to, fuel cost per unit of fluid measure, fuel formulation data. environmental emissions regulation data, date of extrinsic data revision, cost of filter element, labor cost to change filter element associated with filter element model ID, etc. In various embodiments, the extrinsic data 412 can be in the form of ASCII, hexadecimal, octal, decimal, binary, HTML, or other character or symbol codes stored electronically. In various embodiments, the extrinsic data 412 is not in the form of compiled code. In some embodiments, extrinsic data 412 can be encrypted at rest on the filter element.

Further examples of the types of data that can be conveyed in accordance with embodiments herein are shown with respect to Table 1 below.

**TABLE 1**

| **Data** Type | **Examples** | |
|---|---|---|
| Filter Element Intrinsic Data | | • Filter Element Manufacturing Date |
| | | • Filter Element Serial Number |
| | | • Filter Element Model ID |
| | | • Filter Element Manufacturer ID |
| | | • Filter Element Plant ID |
| | | • Filter Element Capacity Information |
| | | • Filter Element Terminal Pressure Drop Associated with Model ID |
| | | • Filter Element Loading Curves |
| | | • Filter Element Loading Coefficients |
| | | • Typical Fuel Consumption Rate for Machine Associated with Filter Element Model ID |
| | | • Fuel Usage Penalty Factor for Increased Filter Element Pressure Drop for Machine Associated with Filter Element Model ID |
| Operational Program Data | | • Software Updates |
| | | • Firmware Updates |
| | | • End-of-Life Prediction Algorithms |
| | | • Regeneration Prediction/Initiation Algorithms |
| | | • Performance Calculation/Tracking Algorithms |
| | | • Date/Version of Software/Firmware Update |
| Extrinsic Data | | • Current Fuel Cost |
| | | • Current Fuel Formulation |
| | | • Current Emissions Regulations |
| | | • Cost of Filter Element |
| | | • Labor Cost to Change Filter Element Associated with Filter Element Model ID |
| | | • Date of Extrinsic Data Revision |

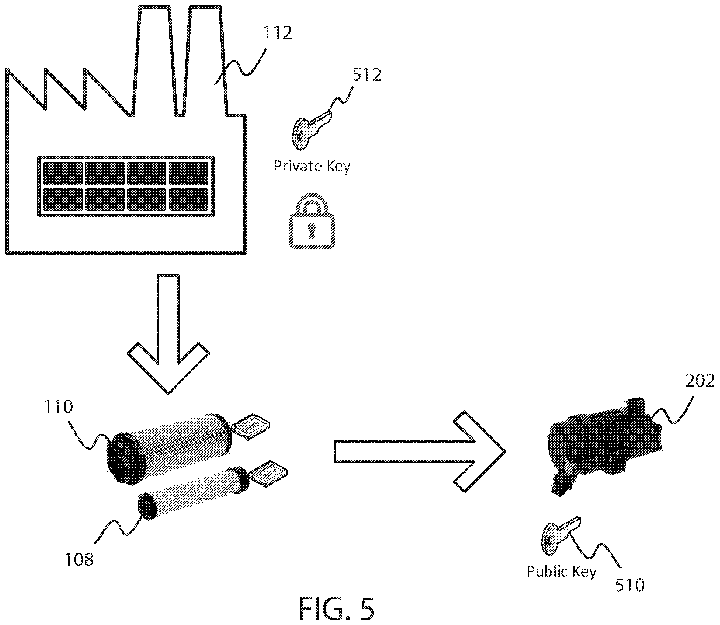

In various embodiments, data carried by filter elements or portions thereof can be encrypted and/or digitally signed to secure the data and/or provide authentication as to the source of the data. Referring now to FIG. 5, a schematic view is shown of a flow of filter elements in accordance with various embodiments herein.

At a manufacturing facility 112, or at another point during distribution, data can be loaded onto a data storage element of a filter element. In some embodiments, the data can be digitally signed using a manufacturer-specific private key 512 (part of a standard public/private key architecture or PKI - public key infrastructure). By applying a digital signature with a manufacturer-specific private key 512, later on the public key 510 for that manufacturer can be used to verify that the data carried by the filter element is authentic and did, in fact, come from the manufacturer or the holder of the private key.

Alternatively, or in addition to digitally signing the data, the data can be encrypted using a manufacturer specific public key. In this way, only a device holding the manufacturer specific private key (forming a pair with the public key used for encryption - separate from the key pair used for digitally signing) can be used to decrypt the data.

The filter elements 108, 110 can be installed in a filter housing 202. After installation, a public key of the manufacturer can be used to verify the digital signature applied at the manufacturing facility 112. Alternatively, or in addition, a private key of the manufacturer can be used to decrypt the data content stored by the data storage element. A private key of the manufacturer can be stored with the filter housing 202 and/or a reader device at the time the filter housing 202 or reader device is manufactured or at the time the filter housing 202 or the reader device is installed on vehicle, machine, in a plant location, etc. The public key of the manufacturer can also be stored with the filter housing 202 and/or reader device. In some embodiments, the public key of the manufacturer can be passed along to the filter housing 202 or reader device by being carried with a filter element.

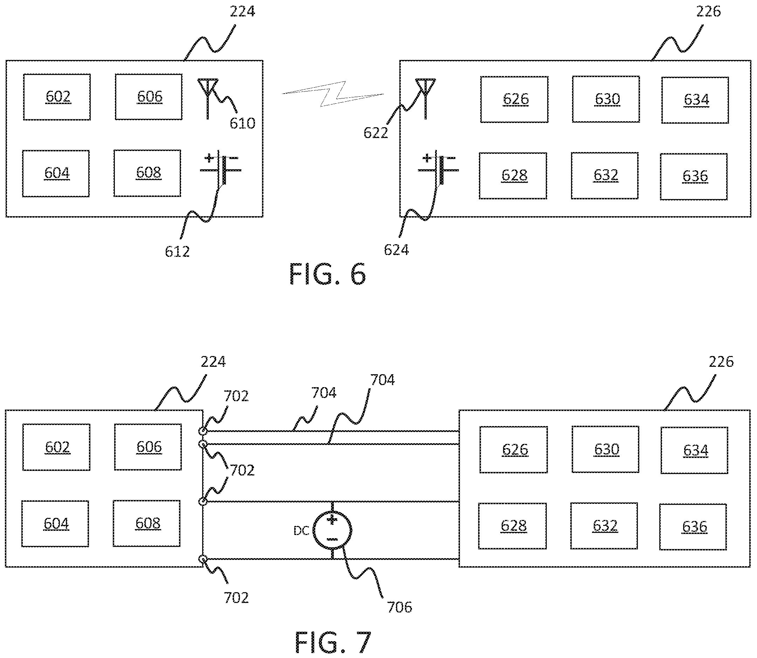

Circuitry associated with filter elements herein can include various specific electronic components in order to execute operations as described herein. Similarly, circuitry associated with reader devices herein (either as associated with a filter housing or other filter structure or as located separately from a filter housing or other filter structure) can include various specific electronic components in order to execute operations as described herein. Referring now to FIG. 6. a schematic view of components of a system is shown in accordance with various embodiments herein.

Components associated with a data storage element 224 can include one or more of an antenna 610, a power supply circuit 612 (which can include one or more of a battery, a capacitor, a power-receiver such as a wireless power receiver), a control circuit 602 (which can include a processor, a microcontroller, an ASIC, or the like), a memory storage circuit 604 (which can include volatile or non-volatile electronic memory), a communication circuit 606, and a cryptographic circuit 608 (which can include a specialized cryptographic processor and/or data associated with cryptographic functions). In some embodiments herein, a wireless power receiver can include an LC circuit. In some embodiments, the wireless power receiver can include an RF power receiver. In some embodiments, one or more components of a power supply circuit, such as a wireless power receiver, can be disposed on or in the filter body.

It will be appreciated that in some embodiments a specific data storage element 224 may not include all of the components shown and described with respect to FIG. 6. In addition, in some embodiments data storage element 224 may include additional components beyond what is shown and described with respect to FIG. 6.

Components associated with a reader device 226 can include one or more of an antenna 622, a power supply circuit 624 (which can include one or more of a battery, a capacitor, or a power-receiver), a control circuit 626 (which can include a processor, a microcontroller, an ASIC, or the like), a memory storage circuit 628 (which can include volatile or non-volatile memory), a communication circuit 630, a cryptographic circuit 632 (which can include a specialized cryptographic processor and/or data associated with cryptographic functions), a clock circuit 634, and a location circuit 636.

In some embodiments, communication between components of a system can be conducted wirelessly. However, in other embodiments, communication between components of a system can be conducted through a wired connection. Referring now to FIG. 7, a schematic view is shown of components of a system in accordance with various embodiments herein.

Components associated with a data storage element 224 can include one or more of a control circuit 602 (which can include a processor, a microcontroller, an ASIC, or the like), a memory storage circuit 604 (which can include volatile or non-volatile electronic memory), a communication circuit 606, and a cryptographic circuit 608 (which can include a specialized cryptographic processor and/or data associated with cryptographic functions). Power can be provided from a power supply 706 that is external to the data storage element (and could be from a vehicle or another source). The data storage element 224 can be connected to the power supply via electrical contacts 702. As represented in FIG. 7, the power supply 706 is a DC power source, but AC power sources are also contemplated herein. It will be appreciated that in some embodiments a specific data storage element 224 may not include all of the components shown and described with respect to FIG. 7. In addition, in some embodiments data storage element 224 may include additional components beyond what is shown and described with respect to FIG. 7.

Components associated with a reader device 226 can include one or more of a control circuit 626 (which can include a processor, a microcontroller, an ASIC, or the like), a memory storage circuit 628 (which can include volatile or non-volatile memory), a communication circuit 630, a cryptographic circuit 632 (which can include a specialized cryptographic processor and/or data associated with cryptographic functions), a clock circuit 634, and a location circuit 636. Power can be provided from a power supply 706 that is external to the data storage element (and could be from a vehicle or another source). The reader device 226 can be connected to the data storage element 224 (such as when the filter element is installed in a filter housing) via wires 704.

### Methods

Various methods are included herein. In some embodiments, a method of providing data to a filtration system in the field is included. The method can include storing operational program data on a filter element, the filter element comprising a filter body; a filter media disposed within the filter body; and a data storage element associated with the filter element. The method can further include installing the filter element within a filter housing. The filter housing can define an interior volume. The filter element can be configured to fit within the interior volume of the filter housing. The method can further include passing the operational program data onto a reader device.

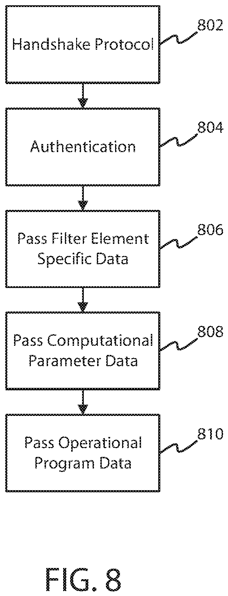

Referring now to FIG. 8. a diagram is shown of a method in accordance with various embodiments herein. The method can include an operation including a handshake protocol 802. The method can also include an operation including an authentication protocol 804.

The method can also include operations of passing data from a data storage element associated with a filter element to a reader device (associated with the filter housing or remotely located). In some embodiments, data can be passed in a particular order. By way of example, data that is directly needed for operation of the filtration system, if any, can be transferred first. For example, filter element intrinsic data such as that described above can be transferred 806 first in some embodiments. In some embodiments, extrinsic data can be transferred 808 next. In some embodiments, operational program data can be transferred 810 last.

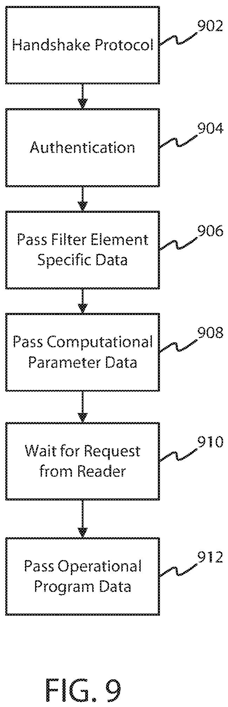

In some embodiments, reader devices herein can prompt the filter element and/or the data storage element thereon when certain types of data are desired. In some embodiments, certain types of data are automatically provided by the data storage element while other types of data are only provided after receiving a specific prompt for the same. For example, in some embodiments operational program data may only be provided after the filter element receives a specific prompt from a reader device and/or only after the reader device is properly authenticated. Referring now to FIG. 9, a diagram is shown of a method in accordance with various embodiments herein. The method can include an operation including a handshake protocol 902. The method can also include an operation including an authentication protocol 904.

The method can also include an operation of passing filter element intrinsic data 906 from a data storage element associated with a filter element to a reader device (associated with the filter housing or remotely located). The method can also include an operation of passing extrinsic data 908 from a data storage element associated with a filter element to a reader device (associated with the filter housing or remotely located). The method can also include an operation of waiting for a further request from the reader device 910. Assuming such a request is received, the method can also include an operation of passing operational program data 912 from a data storage element associated with a filter element to a reader device (associated with the filter housing or remotely located).

The transfer of data from the filter element onto a reader device can be impacted by the outcome of the authentication protocol 904. In some embodiments, if the authentication protocol 904 fails, then no data is transferred. However, in some embodiments, some data can be transferred even if the authentication protocol 904 fails. For example, filter element intrinsic data 906 is provided regardless of whether proper authentication resulted from the authentication protocol 904, but other types of data are held back if the authentication protocol 904 fails. In some embodiments, the system can enter a default or baseline operating mode if the authentication protocol 904 fails. In some embodiments, the default or baseline operation mode can include the filtration system sending a signal on to other components that it has entered a default or baseline operation mode. In some embodiments, the default or baseline operation mode can include the use of algorithms that are more conservative (e.g., predicting an earlier end-of-life for the filter element and/or shorter servicing intervals) than would be applied if the authentication protocol 904 terminated successfully.

In various embodiments, the transfer and/or use of certain types of data, such as operational program data can be contingent based on other data such as dates of revisions and/or version information. For example, information such as a date or version of a carried piece of operational program data such as a software or firmware update can be evaluated before or after transferring the operational program data. In this manner, if the reader device (or other device that would be updated using the operational program data carried) has already received the update or is already operating with a more recent version of the operational program data then the operational program data may not be transferred.

Alternatively, if data that is outdated or otherwise obsolete is transferred, then it may simply be discarded if the reader device (or other device that would be updated using the operational program data carried) has already received the update or is already operating with a more recent version of the operational program data.

Similarly, information such as a date of extrinsic data revision can be evaluated before the extrinsic data in question is actually put to use in calculations. If the extrinsic data revision date is not sufficiently recent or if the currently relied upon extrinsic data has a more recent revision date, then the system can reject the extrinsic data carried by the filter element and rely upon previously obtained extrinsic data and/or default extrinsic data values.

Data can also be evaluated and excluded or included based on additional factors. By way of example, various types of data herein, and particularly extrinsic data can be specific for geography (for example, country and/or region). As such, data herein, such as extrinsic data can be marked with one or more countries and/or regions of validity. This can be evaluated by one or more components of the system based on the current location and/or stored location of the filtration system and/or reader device. If the extrinsic data is not valid based on a country and/or region determination, then the system can reject the extrinsic data carried by the filter element and rely upon previously obtained extrinsic data and/or default extrinsic data values. In some embodiments, multiple versions of data can be carried by a filter element. For example, multiple versions of one or more types of extrinsic data can be carried by a filter element wherein the multiple versions correspond to multiple countries and/or regions. In some embodiments, the system and/or reader device can evaluate the versions and select the correct version and discard the rest. In some embodiments, a country and/or region can be provided to the filter element by the system and/or reader device and then the filter element only transfers the correct version to the system and/or reader device.

In some embodiments, evaluation of a date relating to data carried by a filter element can include comparing the date to a date value provided by an ECU or a date value maintained by a clock circuit that forms part of the filtration system or with which the filtration system conununicates. If the comparison reveals that the date of the data carried by the filter element exceeds a threshold value (such as greater than 10. 30, 60, 90, 120, 180, 365. or 730 days old), then the system can initiate one or more of terminating any further transfer of data, discarding the transferred data, reverting operation to a default or baseline mode, or the like.

It will be appreciated that while many embodiments herein are directed to filtration systems and associated filter elements, aspects herein can also be used in conjunction with systems other than filtration systems. For example, embodiments herein can include disposable elements that include a data storage element and move through a supply chain and can be installed within a system in the field to deliver a data payload to the system in the field. Such systems can include those relying upon disposable/consumable elements and can specifically include, but are not limited to, consumer appliances, industrial systems, power systems, and the like. Specific disposable/consumable elements can include batteries, tool blades, physical consumables, and the like.

### Data Transfer Order

According to the claims, data is passed in a particular order. By way of example, data that is directly needed for operation of the filtration system, if any, can be prioritized and transferred first. According to the claims, the data payload carried by the filter element includes prioritized and non-prioritized data. The prioritized data is transferred first to a reader device associated with a housing or a reader device external to the filter housing. For example, filter element intrinsic data can be prioritized data and can be transferred first in some embodiments. In some embodiments, extrinsic data can be transferred after filter element intrinsic data. In some embodiments, operational program data, including but not limited to compiled program code, object code, assembly code, and/or machine code, can be given the lowest priority and can be transferred last.

## Claims

1. A method of providing data to a filtration system in the field comprising:
storing data on a filter element, the filter element comprising
- a filter body (232);
- a filter media (234) disposed within the filter body (232); and
- a data storage element (222, 224) associated with the filter element for storing said data;
installing the filter element within a filter housing (202), the filter housing (202) defining an interior volume, the filter element configured to fit within the interior volume of the filter housing (202); and
passing the data onto a reader device (226, 228), **characterized in that** the data include prioritized and non-prioritized data and wherein the prioritized data are transferred first to the reader device (226, 228).

2. The method of claim 1, wherein the data comprise filter element intrinsic data as the prioritized data, the method further comprising passing first the filter element intrinsic data to the reader device (226, 228).

3. The method of any of claims 1-2, wherein the data comprises filter element intrinsic data and operational program data and wherein the filter element intrinsic data is passed before the operational program data.

4. The method of the preceding claim, wherein the operational program data are given the lowest priority and are transferred last.

5. The method of any of claims 3-4, wherein the operational program data is not passed until specifically requested by the reader device (226, 228).

6. The method of any of claims 1-5, wherein the data comprises extrinsic data, the method further comprising passing extrinsic data to the reader device (226, 228), and wherein the extrinsic data are transferred after the filter element intrinsic data.

7. The method of any of claims 1-6, wherein the data comprise multiple versions of data, optionally multiple versions of one or more types of extrinsic data wherein the multiple versions correspond to multiple countries and/or regions, and
wherein the system and/or reader device (226, 228) evaluate the versions and select the correct version and discard the rest.

8. The method of claim 7, wherein the reader device (226, 228) is associated with the filter housing (202).

9. A filtration system comprising:
a filter element comprising
- a filter body (232);
- a filter media (234) disposed within the filter body (232);
- a data storage element (222, 224) associated with the filter element, the data storage element (222, 224) comprising data; and
a reader device (226, 228) external to the filter element and in wired or wireless communication with the filter element;
wherein the system is configured for passing the data onto the reader device (226, 228),
**characterized in that** the data include prioritized and non-prioritized data and wherein the system is configured to transfer first the prioritized data to the reader device (226, 228).

10. The system of claim 9, wherein the data comprise filter element intrinsic data as the prioritized data, the system being further configured for passing first the filter element intrinsic data to the reader device (226, 228);
wherein the filter element intrinsic data optionally include at least one of:
a manufacturing date;
a filter element serial number;
a filter element model ID;
a filter element manufacturer ID;
a filter element plant ID; and
a filter element performance characteristic parameter, the filter element performance characteristic parameter including at least one selected from the group consisting of:
filter element capacity information for model ID;
filter element terminal pressure drop for model ID;
filter element loading curve for model ID;
filter element loading coefficient for model ID;
typical fuel consumption rate for machine associate with filter element model ID; and
fuel usage penalty factor for increased filter element pressure drop for machine associated with filter element model ID.

11. The system of any of claims 9-10, wherein the data comprises filter element intrinsic data and operational program data and wherein the system is configured for passing the filter element intrinsic data before the operational program data;
the operational program data optionally comprising at least one of:
an algorithm definition;
an operating software update; and
a firmware update.

12. The system of the preceding claim, wherein system is configured to give the lowest priority and transfer last the operational program data, and/or wherein system is configured to not pass the operational program data to the reader device (226, 228) until specifically requested by the reader device (226, 228).

13. The system of any of claims 9-11, wherein the data comprises extrinsic data, the system being further configured for passing extrinsic data to the reader device (226, 228) after the filter element intrinsic data;
the extrinsic data optionally comprising at least one of:
fuel cost per unit of fluid measure;
fuel formulation data;
environmental emissions regulation data;
cost of filter element;
labor cost to change filter element; and
date of extrinsic data revision.

14. The system of any of claims 9-13, wherein the data comprise multiple versions of data, and
wherein the system and/or reader device (226, 228) is configured to evaluate the versions and select the correct version and discard the rest.

15. The system of claim 14, wherein the data comprise multiple versions of one or more types of extrinsic data wherein the multiple versions correspond to multiple countries and/or regions.

## Patentansprüche

1. Verfahren eines Bereitstellens von Daten für ein Filtrationssystem im Feldeinsatz, umfassend:
Speichern von Daten auf einem Filterelement, wobei das Filterelement umfasst:
- einen Filterkörper (232);
- ein Filtermedium (234), welches innerhalb des Filterkörpers (232) angeordnet ist; und
- ein Datenspeicherelement (222, 224), welches dem Filterelement zugeordnet ist, zum Speichern der Daten;
Installieren des Filterelements in einem Filtergehäuse (202), wobei das Filtergehäuse (202) ein inneres Volumen definiert, wobei das Filterelement dazu eingerichtet ist, in das innere Volumen des Filtergehäuses (202) zu passen; und
Übermitteln der Daten auf eine Lesevorrichtung (226, 228), **dadurch gekennzeichnet, dass** die Daten priorisierte und nicht priorisierte Daten umfassen und wobei die priorisierten Daten zuerst an die Lesevorrichtung (226, 228) übertragen werden.

2. Verfahren nach Anspruch 1, wobei die Daten intrinsische Filterelementdaten als die priorisierten Daten umfassen, wobei das Verfahren ferner ein Übermitteln der intrinsischen Filterelement Daten zuerst an die Lesevorrichtung umfasst.

3. Verfahren nach einem der Ansprüche 1-2, wobei die Daten intrinsische Filterelementdaten und Betriebsprogrammdaten umfassen und wobei die intrinsischen Filterelementdaten vor den Betriebsprogrammdaten übermittelt werden.

4. Verfahren nach dem vorhergehenden Anspruch, wobei die Betriebsprogrammdaten die niedrigste Priorität erhalten und zuletzt übertragen werden.

5. Verfahren nach einem der Ansprüche 3-4, wobei die Betriebsprogrammdaten nicht übermittelt werden, bis dies spezifisch durch die Lesevorrichtung (226, 228) angefordert wird.

6. Verfahren nach einem der Ansprüche 1-5, wobei die Daten extrinsische Daten umfassen, wobei das Verfahren ferner ein Übermitteln von extrinsischen Daten an die Lesevorrichtung (226, 228) umfasst und wobei die extrinsischen Daten nach den intrinsischen Filterelementdaten übertragen werden.

7. Verfahren nach einem der Ansprüche 1-6, wobei die Daten mehrere Versionen von Daten, optional mehrere Versionen eines oder mehrerer Typen von extrinsischen Daten, umfassen, wobei die mehreren Versionen mehreren Ländern und/oder Regionen entsprechen, und
wobei das System und/oder die Lesevorrichtung (226, 228) die Versionen evaluieren und die korrekte Version auswählen und den Rest verwerfen.

8. Verfahren nach Anspruch 7, wobei die Lesevorrichtung (226, 228) dem Filtergehäuse (202) zugeordnet ist.

9. Filtrationssystem, umfassend:
ein Filterelement, welches umfasst:
- einen Filterkörper (232);
- ein Filtermedium (234), welches innerhalb des Filterkörpers (232) angeordnet ist;
- ein Datenspeicherelement (222, 224), welches dem Filterelement zugeordnet ist, wobei das Datenspeicherelement (222, 224) Daten umfasst; und
eine Lesevorrichtung (226, 228), welche außerhalb des Filterelements angeordnet ist und in einer drahtgebundenen oder drahtlosen Kommunikation mit dem Filterelement steht;
wobei das System dazu eingerichtet ist, die Daten auf die Lesevorrichtung (226, 228) zu übermitteln,
**dadurch gekennzeichnet, dass** die Daten priorisierte und nicht priorisierte Daten umfassen und wobei das System dazu eingerichtet ist, zuerst die priorisierten Daten an die Lesevorrichtung (226, 228) zu übertragen.

10. System nach Anspruch 9, wobei die Daten intrinsische Filterelementdaten als die priorisierten Daten umfassen, wobei das System ferner dazu eingerichtet ist, zuerst die intrinsischen Filterelementdaten an die Lesevorrichtung (226, 228) zu übermitteln; wobei die intrinsischen Filterelementdaten optional wenigstens eines umfassen, aus:
einem Herstellungsdatum;
einer Filterelement-Seriennummer;
einer Filterelement-Modell-ID;
einer Filterelement-Hersteller-ID;
einer Filterelement-Anlagen-ID; und
einem Filterelement-Leistungskennwertparameter, wobei der Filterelement-Leistungskennwertparameter wenigstens eines umfasst, ausgewählt aus der Gruppe, bestehend aus:
Filterelement-Kapazitätsinformationen für die Modell-ID;
einem Filterelement-Anschlussdruckabfall für die Modell-ID;
einer Filterelement-Lastkurve für die Modell-ID;
einem Filterelement-Lastkoeffizienten für die Modell-ID;
einer typischen Kraftstoffverbrauchsrate für eine Maschine, welche der Filterelement-Modell-ID zugeordnet ist; und
einem Kraftstoffverbrauchsstraffaktor für einen erhöhten Filterelement-Druckabfall für eine Maschine, welche der Filterelement-Modell-ID zugeordnet ist.

11. System nach einem der Ansprüche 9-10, wobei die Daten intrinsische Filterelementdaten und Betriebsprogrammdaten umfassen und wobei das System dazu eingerichtet ist, die intrinsischen Filterelementdaten vor den Betriebsprogrammdaten zu übermitteln;
wobei die Betriebsprogrammdaten optional wenigstens eines umfassen, aus:
einer Algorithmusdefinition;
einer Betriebssoftware-Aktualisierung; und
einer Firmware-Aktualisierung.

12. System nach dem vorhergehenden Anspruch, wobei das System dazu eingerichtet ist, den Betriebsprogrammdaten die niedrigste Priorität zu geben und diese als Letztes zu übertragen, und/oder wobei das System dazu eingerichtet ist, die Betriebsprogrammdaten nicht an die Lesevorrichtung (226, 228) zu übermitteln, bis dies spezifisch durch die Lesevorrichtung (226, 228) angefordert wird.

13. System nach einem der Ansprüche 9-11, wobei die Daten extrinsische Daten umfassen, wobei das System ferner dazu eingerichtet ist, extrinsische Daten nach den intrinsischen Filterelementdaten an die Lesevorrichtung (226, 228) zu übermitteln; wobei die extrinsischen Daten optional wenigstens eines umfassen, aus:
Kraftstoffkosten pro Fluidmaßeinheit;
Kraftstoffformulierungsdaten;
Regulierungsdaten für Umweltemissionen;
Kosten des Filterelements;
Laborkosten, um das Filterelement zu ändern; und
Datum einer Revision der extrinsischen Daten.

14. System nach einem der Ansprüche 9-13, wobei die Daten mehrere Versionen von Daten umfassen und
wobei das System und/oder die Lesevorrichtung (226, 228) dazu eingerichtet ist, die Versionen zu evaluieren und die korrekte Version auszuwählen und den Rest zu verwerfen.

15. System nach Anspruch 14, wobei die Daten mehrere Versionen eines oder mehrerer Typen von extrinsischen Daten umfassen, wobei die mehreren Versionen mehreren Ländern und/oder Regionen entsprechen.

## Revendications

1. Procédé de fourniture de données à un système de filtration dans le domaine comprenant les étapes consistant à :
stocker des données sur un élément de filtre, l'élément de filtre comprenant
- un corps de filtre (232) ;
- un milieu filtrant (234) disposé à l'intérieur du corps de filtre (232) ; et
- un élément de stockage de données (222, 224) associé à l'élément de filtre pour stocker lesdites données ;
installer l'élément de filtre à l'intérieur d'un logement de filtre (202), le logement de filtre (202) définissant un volume intérieur, l'élément de filtre configuré pour s'ajuster à l'intérieur du volume intérieur du logement de filtre (202) ; et
faire passer les données sur un dispositif de lecture (226, 228), **caractérisé en ce que** les données incluent des données prioritaires et des données non prioritaires et dans lequel les données prioritaires sont transférées premièrement au dispositif de lecture (226, 228).

2. Procédé selon la revendication 1, dans lequel les données comprennent des données intrinsèques de l'élément de filtre comme données prioritaires, le procédé comprenant en outre le fait de faire passer en premier les données intrinsèques de l'élément de filtre au dispositif de lecture (226, 228).

3. Procédé selon l'une quelconque des revendications 1 à 2, dans lequel les données comprennent des données intrinsèques de l'élément de filtre et des données de programme opérationnel et dans lequel les données intrinsèques de l'élément de filtre passent avant les données de programme opérationnel.

4. Procédé selon la revendication précédente, dans lequel les données de programme opérationnel reçoivent la priorité la plus faible et sont transférées en dernier.

5. Procédé selon l'une quelconque des revendications 3 à 4, dans lequel les données de programme opérationnel ne passent pas jusqu'à ce que spécifiquement requis par le dispositif de lecture (226, 228).

6. Procédé selon l'une quelconque des revendications 1 à 5, dans lequel les données comprennent des données extrinsèques, le procédé comprenant en outre le fait de faire passer des données extrinsèques au dispositif de lecture (226, 228), et dans lequel les données extrinsèques sont transférées après les données intrinsèques de l'élément de filtre.

7. Procédé selon l'une quelconque des revendications 1 à 6, dans lequel les données comprennent de multiples versions de données, éventuellement de multiples versions d'un ou plusieurs types de données extrinsèques dans lequel les multiples versions correspondent à de multiples pays et/ou régions, et dans lequel le système et/ou le dispositif de lecture (226, 228) évalue les versions et sélectionne la version correcte et élimine le reste.

8. Procédé selon la revendication 7, dans lequel le dispositif de lecture (226, 228) est associé au logement de filtre (202).

9. Système de filtration comprenant :
un élément de filtre comprenant
- un corps de filtre (232) ;
- un milieu filtrant (234) disposé à l'intérieur du corps de filtre (232) ;
- un élément de stockage de données (222, 224) associé à l'élément de filtre, l'élément de stockage de données (222, 224) comprenant des données ; et
un dispositif de lecture (226, 228) externe à l'élément de filtre et en communication câblée ou sans fil avec l'élément de filtre ;
dans lequel le système est configuré pour faire passer les données sur le dispositif de lecture (226, 228),
**caractérisé en ce que** les données incluent des données prioritaires et des données non prioritaires et dans lequel le système est configuré pour transférer en premier les données prioritaires au dispositif de lecture (226, 228).

10. Système selon la revendication 9, dans lequel les données comprennent des données intrinsèques de l'élément de filtre comme données hiérarchisées, le système étant en outre configuré pour faire passer en premier les données intrinsèques de l'élément de filtre au dispositif de lecture (226, 228) ;
dans lequel les données intrinsèques de l'élément de filtre incluent éventuellement au moins l'un parmi :
une date de fabrication ;
un numéro de série de l'élément de filtre ;
un ID de modèle d'élément de filtre ;
un ID d'un fabricant d'élément de filtre ;
un ID d'installation d'élément de filtre ; et
un paramètre de caractéristique de performance de l'élément de filtre, le paramètre de caractéristique de performance de l'élément de filtre incluant au moins l'un sélectionné dans le groupe constitué :
d'informations de capacité de l'élément de filtre pour l'ID de modèle ;
d'une chute de pression du terminal d'élément de filtre pour l'ID de modèle ;
d'une courbe de charge d'élément de filtre pour l'ID de modèle ;
d'un coefficient de charge d'élément de filtre pour l'ID de modèle ;
d'un taux de consommation typique en carburant pour une machine associée à l'ID de modèle d'élément de filtre ; et
d'un facteur de pénalité d'utilisation de carburant pour une chute de pression accrue de l'élément de filtre pour une machine associée à l'ID de modèle d'élément de filtre.

11. Système selon l'une quelconque des revendications 9 à 10, dans lequel les données comprennent des données intrinsèques de l'élément de filtre et des données de programme opérationnel et dans lequel le système est configuré pour faire passer les données intrinsèques de l'élément de filtre avant les données de programme opérationnel ;
les données de programme opérationnel comprenant éventuellement au moins l'une parmi :
une définition d'algorithme ;
une mise à jour de logiciel de fonctionnement ; et
une mise à jour du firmware.

12. Système selon la revendication précédente, dans lequel le système est configuré pour donner la priorité la plus faible et transférer en dernier les données de programme opérationnel, et/ou dans lequel un système est configuré pour ne pas faire passer les données de programme opérationnel au dispositif de lecture (226, 228) jusqu'à spécifiquement requis par le dispositif de lecture (226, 228).

13. Système selon l'une quelconque des revendications 9 à 11, dans lequel les données comprennent des données extrinsèques, le système étant en outre configuré pour faire passer des données extrinsèques au dispositif de lecture (226, 228) après les données intrinsèques de l'élément de filtre ;
les données extrinsèques comprenant éventuellement au moins l'un parmi :
un coût de carburant par unité de mesure de fluide ;
des données de formulation de carburant ;
des données de régulation d'émissions environnementales ;
un coût de l'élément de filtre ;
un coût de main d'oeuvre pour changer l'élément de filtre ; et
une date de révision des données extrinsèques.

14. Système selon l'une quelconque des revendications 9 à 13, dans lequel les données comprennent de multiples versions de données, et
dans lequel le système et/ou le dispositif de lecture (226, 228) est configuré pour évaluer les versions et sélectionner la version correcte et éliminer le reste.

15. Système selon la revendication 14, dans lequel les données comprennent de multiples versions d'un ou plusieurs types de données extrinsèques dans lequel les multiples versions correspondent à de multiples pays et/ou régions.
